Europäisches Patentamt

European Patent Office

Office européen des brevets

(11) Veröffentlichungsnummer : **0 179 208**
**B1**

(12) **EUROPÄISCHE PATENTSCHRIFT**

(45) Veröffentlichungstag der Patentschrift :
30.09.87

(51) Int. Cl.⁴ : **C 04 B    2/10**

(21) Anmeldenummer : **85109638.8**

(22) Anmeldetag : **31.07.85**

(54) **Verfahren und Anlage zur Wärmebehandlung von feinkörnigem Gut.**

(30) Priorität : **25.10.84 DE 3439129**

(43) Veröffentlichungstag der Anmeldung :
**30.04.86 Patentblatt 86/18**

(45) Bekanntmachung des Hinweises auf die Patenterteilung : **30.09.87 Patentblatt 87/40**

(84) Benannte Vertragsstaaten :
**AT BE DE FR GB IT**

(56) Entgegenhaltungen :
**DE-A- 2 702 693**
**DE-A- 3 131 023**

(73) Patentinhaber : **Krupp Polysius AG**
**Graf-Galen-Strasse 17**
**D-4720 Beckum (DE)**

(72) Erfinder : **Schulte, Hans-Gerd, Dipl.-Ing.**
**Büscher Strasse 30**
**D-4709 Bergkamen (DE)**

(74) Vertreter : **Tetzner, Volkmar, Dr.-Ing. Dr. Jur.**
**Van-Gogh-Strasse 3**
**D-8000 München 71 (DE)**

## Beschreibung

Die Erfindung betrifft ein Verfahren entsprechend dem Oberbegriff des Anspruches 1 sowie eine Anlage zur Durchführung dieses Verfahrens.

Bestimmte Arte von feinkörnigem Gut, insbesondere gewisse Typen von Kalk und Dolomit, weisen im gemahlenen Zustand schlechte Fließeigenschaften auf, und zwar vor allem dann, wenn sie einen hohen Anteil an Feinstgut aufweisen. Die ungünstigen Fließeigenschaften sind vor allem bei weichen Kalksteinsorten, wie Kreide oder mergeligen Rohstoffen, zu verzeichnen, ferner bei Materialien, die beim Brennprozeß dekrepitieren (d. h. zerplatzen). Man kann zwar die Fließeigenschaften durch gröbere Vermahlung teilweise verbessern. Neigt jedoch das Gut zur Dekrepitation, so schaukelt sich der Feinanteil auf, wenn man — wie bisher üblich — den Filterstaub gemeinsam mit dem Frischgut in die zum letzten (obersten) Zyklon des mehrstufigen Zyklonvorwärmers führende Gasleitung aufgibt. Es stellen sich dann nach kurzer Zeit erhebliche Betriebsstörungen ein, die auf Anbackungen in den oberen Zyklonen oder einem schubweisen Fluß des Materials durch die Anlage beruhen. Während im ungestörten Normalbetrieb die Menge des Filterstaubes etwa 5 bis 10 % der Frischgutmenge beträgt, kann sich der Filterstaub bei Materialien, die bei der Calcination zu feinkörnigem Zerfall neigen, auf über 40 % aufschaukeln. Hieraus ergeben sich die oben bereits erwähnten schlechten Fließeigenschaften des Materials, die Anbackungen in Rohrleitungen, Mehlschurren und Zyklonen sowie die Überlastung der oberen Zyklonstufen. Ein gleichmäßiger Betriebsablauf ist unter diesen Bedingungen nicht mehr aufrechtzuerhalten.

Der Erfindung liegt daher die Aufgabe zugrunde, ein Verfahren der im Oberbegriff des Anspruches 1 vorausgesetzten Art so auszubilden, daß ein einwandfreier Betriebsablauf (ohne Gutanbackungen und ohne schubweisen Materialfluß) auch bei der Wärmebehandlung von Feingut gewährleistet ist, das im gemahlenen Zustand schlechte Fließeigenschaften besitzt und/oder beim Brennprozeß zur Dekrepitation neigt.

Diese Aufgabe wird erfindungsgemäß durch die Kombination der kennzeichnenden Merkmale des Anspruches 1 gelöst.

Indem erfindungsgemäß der Wirkungsgrad des dem Filter vorgeschalteten letzten Zyklons des Vorwärmers im Feinstkornbereich verringert, d. h. gezielt verschlechtert wird, gelangt die Feinstfraktion des Frischgutes unter Umgehung der wärmeren Stufen des Vorwärmers direkt in den Filter. Erfindungsgemäß wird nun ein Teil des im Filter abgeschiedenen Filterstaubes direkt dem Calcinator zugeleitet (d. h. unter Umgehung des Vorwärmers).

Durch die Kombination dieser beiden Maßnahmen läßt es sich erreichen, daß sich in der Anlage weder Gutanbackungen noch ein schubweiser Materialfluß einstellen.

Je nach den gegebenen Verhältnissen wird entweder der gesamte im Filter abgeschiedene Filterstaub oder nur eine Teilmenge direkt dem Calcinator zugeleitet. Bei leicht calcinierbaren Materialien, bei denen höhere Restglühverluste (von beispielsweise 3 bis 5 %) zugelassen werden können, besteht ferner die Möglichkeit, einen Teil des im Filter abgeschiedenen Filterstaubes dem Fertiggut nach der Kühlstufe zuzumischen.

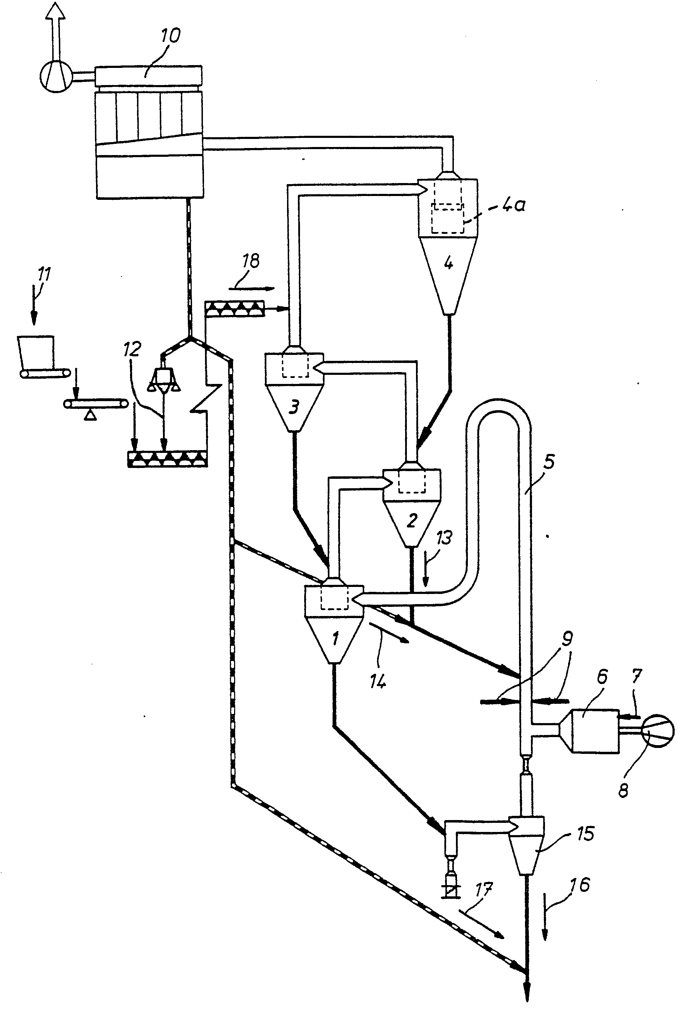

Weitere Einzelheiten der Erfindung sind Gegenstand der Unteransprüche und werden im Zusammenhang mit der Beschreibung eines in der Zeichnung veranschaulichten Ausführungsbeispieles näher erläutert.

Die dargestellte Anlage enthält Zyklone 1, 2, 3 und 4, von denen die Zyklone 2, 3 und 4 einen mehrstufigen Zyklonvorwärmer zur Vorwärmung des Gutes mit den Abgasen eines Calcinators 5 bilden. Dem Calcinator 5 werden einerseits Verbrennungsgase über eine Brennkammer 6 (mit Brennstoffzuführung 7 und Luftzuführung durch einen Ventilator 8) und andererseits zusätzlicher Brennstoff über Brenner 9 zugeführt. Der Zyklon 1 dient zur Abscheidung des im Calcinator 5 gebrannten Gutes.

Die vier Zyklone 1, 2, 3 und 4 sind über ihre Gas- und Gutleitungen in der aus der Zeichnung ersichtlichen Weise verbunden. Dem obersten Zyklon 4 ist ein Filter 10 nachgeschaltet. Der Filterstaub kann (über nicht im einzelnen veranschaulichte Stellorgane) teils dem bei 11 zugeführten Frischgut beigemischt werden (Pfeil 12), teils zusammen mit dem aus dem Zyklon 2 ausgetragenen Gut (Pfeil 13) dem Calcinator 5 zugeführt werden (Pfeil 14), teils direkt dem Fertiggut nach Verlassen einer Kühlstufe 15 (Pfeil 16) zugemischt werden (Pfeil 17). Das aus Frischgut (Pfeil 11) und Filterstaubanteil (Pfeil 12) bestehende Aufgabegut (Pfeil 18) wird der vom Zyklon 3 zum Zyklon 4 führenden Gasleitung aufgegeben.

Der dem Calcinator 5 nachgeschaltete Zyklon 1 wird in den Fällen als Hochleistungszyklon ausgebildet, bei denen im Calcinator selbst durch Abrieb des oft weichen Kausters oder durch Dekrepitation übermäßige Feinstaubbildung auftritt. Diese feinkörnigen Stäube können mit den Heißgasen aus dem Calcinator in die oberen Zyklonstufen verschleppt werden und dort zu Anbackungen oder schubweisem Materialfluß führen. Bei Verwendung eines Hochleistungszyklons wird der im Calcinator entstehende Feinstaub bis auf eine tolerierbare Restmenge abgeschieden.

Der dem Filter 10 vorgeschaltete oberste Zyklon 4 ist demgegenüber so ausgestaltet (beispielsweise mit einem in der Stellung veränderbaren Tauchrohr 4a versehen), daß sich sein Wirkungsgrad im Feinstkornbereich gezielt verschlechtern läßt. Der Trennschnitt dieses obersten Zyklones 4 kann beispielsweise von 20 μm auf einen beliebigen Wert zwischen 30 und 80 μm, vorzugsweise auf 40 bis

60 μm, insbesondere ca. 50 μm, eingestellt werden.

Das bei 18 der Anlage aufgegebene Gut wird in dem mehrstufigen Zyklonvorwärmer mit den heißen Abgasen des Calcinators 5 vorgewärmt, ehe es (nach Abscheidung im Zyklon 2) in den Calcinator 5 gelangt und hier gebrannt wird. Nach Abscheidung im Zyklon 1 gelangt das gebrannte Gut in die Kühlstufe 15.

Durch die gezielte Veschlechterung des Wirkungsgrades des Zyklons 4 im Feinstkornbereich wird die Feinstfraktion des Frischgutes (Pfeil 11) und der gegebenenfalls bei 12 rückgeführte Anteil des Filterstaubes mit den Abgasen des Zyklonvorwärmers dem Filter 10 zugeführt. Wenigstens ein Teil des im Filter 10 abgeschiedenen Filterstaubes wird bei 14 direkt dem Calcinator 5 zugeführt und entlastet damit den Zyklonvorwärmer. Weitere Anteile des Filterstaubes können bei 12 dem Frischgut oder bei 17 dem Fertiggut zugegeben werden.

Die Erfindung sei weiterhin anhand von zwei Beispielen erläutert. Für die nachstehend beschriebenen Versuche wurde eine halbtechnische Schwebegas-Calcinieranlage benutzt, bestehend aus drei Vorwärmzyklonen und einem Calcinator mit integriertem Zyklonabscheider. Die Kühlung des calcinierten Gutes erfolgte in einem Zyklonkühler. Der oberste Zyklon des dreistufigen Vorwärmers war als Hochleistungszyklon konzipiert, der lediglich im Feinstbereich kleiner 20 μm einen verminderten Abscheidegrad aufwies.

## Beispiel 1

Es wurde ein kreidiger Kalkstein eingesetzt, der wegen seiner feinkörnigen Beschaffenheit bisher als nicht verwertbares Abfallmaterial galt.

| Kornanalyse | Aufgabegut (Gew. %) | Kauster (Gew. %) |
|---|---|---|
| > 100 μm | 18,8 | 13,0 |
| > 63 μm | 34,5 | 21,6 |
| > 40 μm | 50,4 | 28,7 |
| > 32 μm | 59,0 | 33,2 |

a) Die Anlage wurde zunächst in der herkömmlichen Verfahrensweise betrieben, indem der gesamte Filterstaub zusammen mit dem Frischgut der Anlage aufgegeben wurde.

Der angestrebte Rest-$CO_2$-Gehalt von < 0,5 % wurde bei einer Temperatur von 1 040 °C im Calcinator erreicht. Der Kreidekalk bildete beim Durchgang durch den Schwebegaswärmetauscher aufgrund seiner geringen Kornfestigkeit erhebliche Mengen an feinkörnigem Abrieb. Die Abriebbildung war besonders im Calcinatorbereich bei der $CO_2$-Austreibung sehr hoch.

Der Betrieb der Calcinieranlage wurde durch den bereits im Frischgut enthaltenen Körnungsanteil mit einer Korngröße unter 50 μm und durch den sich stetig erhöhenden Filterstaubanteil erheblich gestört. Schon nach kurzer Zeit ging der kontinuierliche Materialfluß in der Anlage in schubweises Fließen über. Bei steigendem Feingutanteil traten dann nach ca. 3-stündiger Betriebszeit erste Blockagen in den Zyklontrichtern und in den Mehlschurren auf. Diese konnten zwar mittels Preßluftlanzen entfernt werden, bildeten sich jedoch in immer kürzeren Zeitabständen erneut. Ein kontinuierlicher Betrieb ließ sich nicht mehr aufrechterhalten.

b) Nunmehr wurde die Anlage nach dem erfindungsgemäßen Verfahren betrieben.

Zunächst wurde der Filterstaub nicht mehr mit dem Frischgut in die Anlage zurückgeführt, sondern über die unter dem Zyklon 2 (vgl. die Zeichnung) befindliche Mehlschurre in den Calcinator geleitet. Die Situation verbesserte sich hierdurch erheblich, jedoch verursachte der mit dem Frischgut eingebrachte und in der obersten Zyklonstufe nur unvollständig ausgesichtete, d. h. weitgehend abgeschiedene Feinanteil kleiner 50 μm einen unerwünschten schubweisen Materialfluß durch die Anlage. Daraufhin wurde der Wirkungsgrad des obersten Zyklons durch Veränderung der Tauchrohrstellung im Feinstkornbereich gezielt verschlechtert und zwar so, daß die Feinstfraktion kleiner 50 μm des Aufgabegutes nahezu vollständig ausgesichtet und mit dem Abgas in den Filter transportiert wurde (der Trennschnitt wurde somit von ca. 20 μm auf ca. 50 μm verlegt).

Der sich im Calcinierbereich verstärkt bildende Feinststaub wurde in erheblicher Menge in den Zyklon 2 und in geringerem Maße auch in den Zyklon 3 verschleppt. Es bildeten sich hohe Staubkreisläufe zwischen den Zyklonen 1 bis 3 aus, die schließlich erneut zu Verstopfungen in den Zyklonkonen und Mehlschurren führten. Als weitere Gegenmaßnahme wurde nun Zyklon 1 durch einen Hochleistungszyklon ersetzt, der nur noch eine kleine, tolerierbare Feinststaubmenge in die oberen Zyklonstufen passieren ließ.

Aufgrund dieser Maßnahmen konnte auch bei dem sehr schwierigen Material ein reibungsloser Betriebsablauf erzielt werden.

Beispiel 2

Ein Dolomit des nachfolgend genannten Kornaufbaues wurde bei 1 120 °C calciniert, wobei ein Rest-$CO_2$-Gehalt von kleiner 1 % erreicht wurde.

| Kornanalyse | Aufgabegut (Gew. %) | Kauster (Gew. %) |
|---|---|---|
| > 100 µm | 10,8 | 0,5 |
| > 63 µm | 30,2 | 7,5 |
| > 40 µm | 46,0 | 19,1 |
| > 32 µm | 56,3 | 28,8 |

Da die starke Dekrepitationsneigung des Dolomits bei der thermischen Zersetzung bekannt war, wurde als Zyklon 1 ein Hochleistungszyklon für die Abscheidung des calcinierten Gutes verwendet.

Der Dolomit wies bei der vorgegebenen Kornfeinheit sehr schlechte Fließeigenschaften in allen Phasen der Wärmebehandlung auf. Es stellte sich ein sehr ungleichmäßiger Betrieb infolge des schubweisen Materialflusses ein. Dies führte zu einem starken Pendeln der Calciniertemperatur, wodurch sich Schwankungen im Rest-$CO_2$-Gehalt des Kausters von 0,3 bis 5,5 % ergaben. Zyklonverstopfungen traten nicht auf.

Untersuchungen mittels spezieller Labortests ergaben, daß durch Reduzierung des Kornanteiles < 40 µm von ursprünglich 56 % auf ca. 25 % die Fließfähigkeit des Dolomitmehles im erforderlichen Maße verbessert werden konnte. Durch Veränderung der Tauchrohrposition des Zyklons 4 wurde die partielle Aussichtung vorgenommen und gleichzeitig die mit dem Frischgut in die Anlage zurückgeführte Filterstaubmenge auf 15 % (bezogen auf die Frischgutmenge) begrenzt. Der überschüssige Filterstaub wurde direkt in den Calcinator aufgegeben.

**Patentansprüche**

1. Verfahren zur Wärmebehandlung von feinkörnigem Gut, wie Kalk und Dolomit, wobei

a) das Gut zunächst im Wärmetausch mit den Abgasen eines Calcinators (5) in einem mehrstufigen Zyklonvorwärmer (2, 3, 4) vorgewärmt,
b) dann in einem Calcinator (5) gebrannt,
c) und anschließend in einer Kühlstufe (15) gekühlt wird,
d) und wobei die Abgase des Zyklonvorwärmers in einem Filter (10) entstaubt werden, dessen Filterstaub wieder in die Anlage zurückgeführt wird,
gekennzeichnet durch die Kombination folgender Merkmale :
e) der Wirkungsgrad des dem Filter (10) vorgeschalteten letzten Zyklons (4) des Vorwärmers wird im Feinstkornbereich derart verringert, daß die unterhalb einer bestimmten Körnung liegende Feinstfraktion des diesem Zyklon zugeführten Gutes mit dem Abgas zum Filter gelangt ;
f) wenigstens ein Teil des im Filter (10) abgeschiedenen Filterstaubes wird direkt dem Calcinator (5) zugeleitet ;
g) der Wirkungsgrad des dem Filter (10) vorgeschalteten Zyklons (4) wird so weit verringert und der dem Calcinator (5) direkt zugeführte Teil des Filterstaubes wird so weit vergrößert, daß sich in der Anlage weder Gutanbackungen noch ein schubweiser Materialfluß einstellen.

2. Verfahren nach Anspruch 1, dadurch gekennzeichnet, daß die Abgase des Calcinators (5) im nachgeschalteten Zyklon (1) einer Hochleistungssichtung unterworfen werden.

3. Verfahren nach Anspruch 1, dadurch gekennzeichnet, daß der gesamte im Filter (10) abgeschiedene Filterstaub direkt dem Calcinator (5) zugeleitet wird.

4. Verfahren nach Anspruch 1, dadurch gekennzeichnet, daß ein Teil des im Filter (10) abgeschiedenen Filterstaubes zusammen mit dem Frischgut dem letzten Zyklon (4) zugeführt wird.

5. Verfahren nach Anspruch 1, dadurch gekennzeichnet, daß ein Teil des im Filter (10) abgeschiedenen Filterstaubes dem Fertiggut nach der Kühlstufe (15) zugemischt wird.

6. Verfahren nach Anspruch 1, dadurch gekennzeichnet, daß die Einstellung des Wirkungsgrades des dem Filter (10) vorgeschalteten Zyklons (4) durch Veränderung der Lage des Tauchrohres (4a) erfolgt.

7. Verfahren nach Anspruch 1, dadurch gekennzeichnet, daß der Trennschnitt des dem Filter (10) vorgeschalteten Zyklons (4) auf 30 bis 80 µm, vorzugsweise auf 40 bis 60 µm, eingestellt wird.

8. Anlage zur Durchführung des Verfahrens nach Anspruch 1, enthaltend

a) einen mehrstufigen Zyklonvorwärmer (2, 3, 4) zur Vorwärmung des Gutes mit den Abgasen eines Calcinators (5),

b) einen Calcinator (5) zum Brennen des vorgewärmten Gutes,

c) einen dem Calcinator (5) nachgeschalteten Zyklon (1) zur Abscheidung des gebrannten Gutes,

d) eine Kühlstufe (15) zum Kühlen des gebrannten Gutes,

e) einen dem Zyklonvorwärmer (2, 3, 4) nachgeschalteten Filter (10),

gekennzeichnet durch die Kombination folgender Merkmale :

f) der Wirkungsgrad des dem Filter (10) vorgeschalteten Zyklons (4) des Vorwärmers ist im Feinstkornbereich einstellbar, vorzugsweise durch Veränderung der Lage des Tauchrohres (4a),

g) es sind Stellorgane vorgesehen, über die wenigstens ein Teil des im Filter (10) abgeschiedenen Filterstaubes direkt dem Calcinator (5) zuführbar ist.

9. Anlage nach Anspruch 8, dadurch gekennzeichnet, daß der dem Calcinator (5) nachgeschaltete Zyklon (1) als Hochleistungszyklon ausgebildet ist.

## Claims

1. Process for the heat treatment of fine-grained material, such as lime and dolomite, in which

a) the material is first of all preheated in heat exchange with the exhaust gases from a calciner (5) in a multistage cyclone preheater (2, 3, 4),

b) then fired in a calciner (5),

c) and then cooled in a cooling stage (15),

d) and the exhaust gases from the cyclone preheater have dust removed from them in a filter (10) from which the filter dust is returned to the apparatus,

characterised by the combination of the following features :

e) the degree of efficiency of the last cyclone (4) of the preheater which is connected before the filter (10) is reduced in the finest grain size range in such a way that the finest-grained proportion of the material delivered to this cyclone and lying below a certain grain size passes with the exhaust gas to the filter ;

f) at least a proportion of the filter dust deposited in the filter (10) is delivered directly to the calciner (5),

g) the degree of efficiency of the cyclone (4) connected before the filter (10) is reduced and the proportion of the filter dust delivered directly to the calciner (5) is increased to such an extent that material does not cake on or flow in batches through the apparatus.

2. Process as claimed in claim 1, characterised in that the exhaust gases from the calciner (5) are subjected to high-powered sifting in the subsequent cyclone (1).

3. Process as claimed in claim 1, characterised in that all of the filter dust deposited in the filter (10) is delivered directly to the calciner (5).

4. Process as claimed in claim 1, characterised in that a proportion of the filter dust deposited in the filter (10) is delivered together with the fresh material to the last cyclone (4).

5. Process as claimed in claim 1, characterised in that a proportion of the filter dust deposited in the filter (10) is mixed together with the finished material after the cooling stage (15).

6. Process as claimed in claim 1, characterised in that the degree of efficiency of the cyclone (4) connected before the filter (10) is set by altering the position of the dip pipe (4a).

7. Process as claimed in claim 1, characterised in that the separation limit of the cyclone (4) connected before the filter (10) is set at 30 to 80 $\mu$m, preferably 40 to 60 $\mu$m.

8. Installation for carrying out the process as claimed in claim 1, comprising

a) a multi-stage cyclone preheater (2, 3, 4) for preheating the material with the exhaust gases from a calciner (5),

b) a calciner (5) for firing the preheated material,

c) a cyclone (1) connected after the calciner (5) for separating off the fired material,

d) a cooling stage (15) for cooling the fired material,

e) a filter (10) connected after the cyclone preheater (2, 3, 4),

characterised by the combination of the following features :

f) the degree of efficiency of the cyclone (4) of the preheater which is connected before the filter (10) is adjustable in the finest grain size range, preferably by altering the position of the dip pipe (4a),

g) regulating devices are provided by means of which at least a proportion of the filter dust deposited in the filter can be delivered directly to the calciner (5).

9. Installation as claimed in claim 8, characterised in that the cyclone (1) connected after the calciner (5) is constructed as a high-powered cyclone.

**0 179 208**

## Revendications

1. Procédé de traitement thermique de matière à granulométrie fine, telle que chaux et dolomie, suivant lequel :

a) la matière subit tout d'abord un échange de chaleur avec les gaz brûlés d'un four de calcination (5) dans un réchauffeur à cyclones à plusieurs étages (2, 3, 4),

b) puis elle passe dans un four de calcination (5),

c) et elle passe ensuite dans un étage de refroidissement (15),

d) les gaz brûlés sortant du réchauffeur à cyclones étant dépoussiérés dans un filtre (10) et la poussière de filtration étant recyclée dans l'installation,

caractérisé par la combinaison des particularités suivantes :

e) le rendement du dernier cyclone (4) du réchauffeur qui précède le filtre (10) est abaissé pour la fraction à granulométrie très fine, de manière que cette fraction de la matière, qui est dirigée sur ce cyclone et dont la granulométrie est inférieure à une valeur déterminée, parvienne avec les gaz brûlés dans le filtre ;

f) au moins une partie de la poussière séparée dans le filtre (10) est dirigée directement dans le four de calcination (5) ;

g) le rendement du cyclone (4) précédant le filtre (10) est abaissé suffisamment, et la proportion de la poussière de filtration dirigée directement dans le four de calcination (5) est augmentée suffisamment pour qu'aucune agglomération ni aucun flux de matière par paquets n'apparaissent dans l'installation.

2. Procédé selon la revendication 1, caractérisé en ce que les gaz brûlés du four de calcination (5) subissent un classement à grand rendement dans le cyclone (1) monté à la suite de ce four.

3. Procédé selon la revendication 1, caractérisé en ce que la totalité de la poussière séparée dans le filtre (10) est dirigée directement dans le four de calcination (5).

4. Procédé selon la revendication 1, caractérisé en ce qu'une partie de la poussière séparée dans le filtre (10) est dirigée avec la matière brute dans le dernier cyclone (4).

5. Procédé selon la revendication 1, caractérisé en ce qu'une partie de la poussière séparée dans le filtre (10) est mélangée avec la matière brute en aval de l'étage de refroidissement (15).

6. Procédé selon la revendication 1, caractérisé en ce que le réglage du rendement du cyclone (4) précédant le filtre (10) s'effectue par modification de la position du tube plongeur (4a).

7. Procédé selon la revendication 1, caractérisé en ce que la limite de séparation du cyclone (4) précédant le filtre (10) est réglée entre 30 et 80 $\mu$m, de préférence entre 40 et 60 $\mu$m.

8. Installation pour la mise en œuvre du procédé selon la revendication 1, comprenant :

a) un réchauffeur à cyclones (2, 3, 4) à plusieurs étages pour le produit et les gaz brûlés d'un four de calcination (5),

b) un four (5) de calcination du produit réchauffé,

c) un cyclone (1) monté à la suite du four de calcination (5) et destiné à la séparation du produit calciné,

d) un étage (15) de refroidissement de la matière calcinée,

e) un filtre (10) monté à la suite du réchauffeur à cyclones (2, 3, 4),

caractérisée par la combinaison des particularités suivantes :

f) le rendement du cyclone (4) du réchauffeur qui précède le filtre (10) est réglable pour la fraction à granulométrie très fine, avantageusement par modification de la position du tube plongeur (4a),

g) des organes de réglage prévus permettent de diriger au moins une partie de la poussière séparée dans le filtre (10) directement dans le four de calcination (5).

9. Installation selon la revendication 8, caractérisée en ce que le cyclone (1) monté à la suite du four de calcination (5) est d'une conception à grand rendement.

6